# EUROPEAN PATENT SPECIFICATION

(11) **EP 2 991 285 B1**
(45) Date of publication and mention of the grant of the patent: **13.09.2017**
(21) Application number: 13886375.8
(22) Date of filing: 06.06.2013
(51) Int. Cl.: H04L 12/703, H04L 12/26, H04L 12/24, H04W 28/16, H04L 12/707, H04L 12/64, H04W 16/00

(54) **METHOD FOR AUTONOMY OF BASE STATION, BASE BAND UNIT, BASE STATION AND CLOUD BASE STATION SYSTEM**
VERFAHREN ZUR AUTONOMIE EINER BASISSTATION, BASISBANDEINHEIT, BASISSTATION UND CLOUD-BASISSTATIONSSYSTEM
PROCÉDÉ POUR L'AUTONOMIE D'UNE STATION DE BASE, UNITÉ BANDE DE BASE, STATION DE BASE ET SYSTÈME DE STATION DE BASE EN NUAGE

(43) Date of publication of application: 02.03.2016
(73) Proprietor: Huawei Technologies Co., Ltd., Longgang District Shenzhen, Guangdong 518129 (CN)
(72) Inventor: JING, Ying, Shenzhen Guangdong 518129 (CN)
(74) Representative: Pfenning, Meinig & Partner mbB
(86) International application number: PCT/CN2013/076868
(87) International publication number: WO 2014/194506

(56) References cited:
- WO-A1-2009/048358
- CN-A- 101 132 357
- CN-A- 101 132 357
- CN-A- 101 232 402
- CN-A- 102 378 186
- CN-A- 102 404 147
- US-A1- 2013 089 336
- CHINA MOBILE RESEARCH INSTITUTE: "C-RAN; The road towards Green RAN", INTERNET CITATION, April 2010 (2010-04), pages 1-31, XP002704051, Retrieved from the Internet: URL:http://nashville.dyndns.org:800/Wirele ssDownloads/lte/Backhaul%20and%20Transport /50292032-CRAN-white-paper-v1-14.pdf [retrieved on 2013-07-23]
- CLARK CHEN ET AL: "SUGGESTIONS ON POTENTIAL SOLUTIONS TO C-RAN", NGMN ALLIANCE , no. Version 4.0 3 January 2013 (2013-01-03), pages 1-41, XP002704068, Retrieved from the Internet: URL:http://www.ngmn.org/uploads/media/NGMN _CRAN_Suggestions_on_Potential_Solutions_t o_CRAN.pdf [retrieved on 2016-02-16]

## Description

### TECHNICAL FIELD

The present invention relates to the field of communications technologies, and in particular, to a method for autonomy of a base station, a baseband unit, a base station, and a cloud base station system.

### BACKGROUND

At present, using a cloud system in the field of base stations, that is, a cloud base station system, may reduce energy consumption of the base station system, reduce capital expenditure and operating expenditure, improve spectral efficiency, and increase bandwidth of a user. Specifically, such a cloud base station system is based on a centralized baseband processing pool, and a remote collaborative wireless network includes a radio frequency unit and an antenna, so that costs can be reduced, processing resources can be shared, energy consumption can be reduced, and utilization of infrastructure can be improved. In short, a large number of base stations are interconnected in a centralized manner to form a base station cloud, and various processing resources of a single station include a baseband processing resource, a main control signaling processing resource, and a transmission processing resource, all of which form a resource pool together to be scheduled by the base station cloud in a centralized manner. The entire base station cloud has a central control system, and the entire base station cloud is managed by a network manager for service transmission. However, during the implementation of the prior art in the foregoing, after the single station loses contact with the central control system, the single station also loses contact with the network manager at the same time, which causes interruption of a borne service, thereby leading to very low utilization of a device.

US 2013/089336A1 discloses a remote radio unit that includes antenna interfaces, RF receivers, and a digital-to-optical converter. The antenna interfaces each receive an antenna signal from a different antenna. The RF receivers downconvert the antenna signals to baseband signals, and convert the baseband signals to digital streams of user data. The digital-to-optical converter converts each of the digital streams of user data to optical signals having different optical wavelengths for output to an optical fiber for communication to a radio equipment control unit. Related radio base stations and network control points are disclosed.

WO2009048358A1 relates to an arrangement comprising an Ethernet carrier network, managed by a management system and comprising a number of levels of management domains, each comprising a number of edge nodes and a number of intermediate nodes. Each edge node comprises fault detection of connectivity check messages and fault locating means with holding means adapted to hold path information for the paths to all other edge nodes. A fault detection means of an edge node having detected a fault is adapted to activate edge node fault locating means to locate the fault using the patch information in the edge node holding means to find a first target intermediate node substantially in the middle of the path containing the fault, and to, directly, send a first loop back message to said intermediate node. A response from said intermediate node indicates that the fault is located at the distant portion of the path, no response indicates that the fault is located at the proximate portion of the path. Further loop back messages are sent to consecutively identified intermediate nodes of the respective path portion identified to contain the fault by the respective preceding loop back message until the fault is localized.

### SUMMARY

Embodiments of the present invention provide a method for autonomy of a base station, a baseband unit according to the independent claims, so that after baseband units lose contact with a central control system, services that have already been borne by these baseband units can be kept from being interrupted, thereby improving utilization of a device.

According to the method for autonomy of a base station, the baseband unit provided in the embodiments of the present invention, after an inter-subrack connection and a heartbeat connection with a first central control point are established, when it is determined that the heartbeat connection with the first central control point is lost, a second central control point is acquired. In the prior art, after contact with a central control system is lost, a borne service is caused to be interrupted, thereby leading to low utilization of a device. But in the technical solutions provided in the present invention, after baseband units lose contact with a central control system, services that have already been borne by these baseband units can still be kept from being interrupted, thereby improving utilization of a device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for autonomy of a base station according to an embodiment of the present invention;
FIG. 2 is a flowchart of a method for autonomy of a base station according to another embodiment of the present invention;
FIG. 3 is a schematic composition diagram of a baseband unit according to another embodiment of the present invention;
FIG 4 is a schematic composition diagram of another baseband unit according to another embodiment of the present invention;
FIG 5 is a schematic composition diagram of a baseband unit according to another embodiment of the present invention; and
FIG 6 is a schematic composition diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the embodiments of the present invention, a cloud base station system includes any one or more base stations, and a base station includes any one or more BBUs (Base band Unit). Each BBU includes a subrack and several boards, and a communication connection may be established between internal boards of the BBU, to implement internal communication of the BBU. In the description of the embodiments of the present invention, one BBU is one single station.

Autonomy of a base station refers to that after one BBU or a group of interconnected BBUs served by the base station lose a communication connection with a central control point, this BBU or these BBUs may reselect a central control point autonomously, to re-provide a service of the base station, and re-provide capabilities of access and management of a network manager.

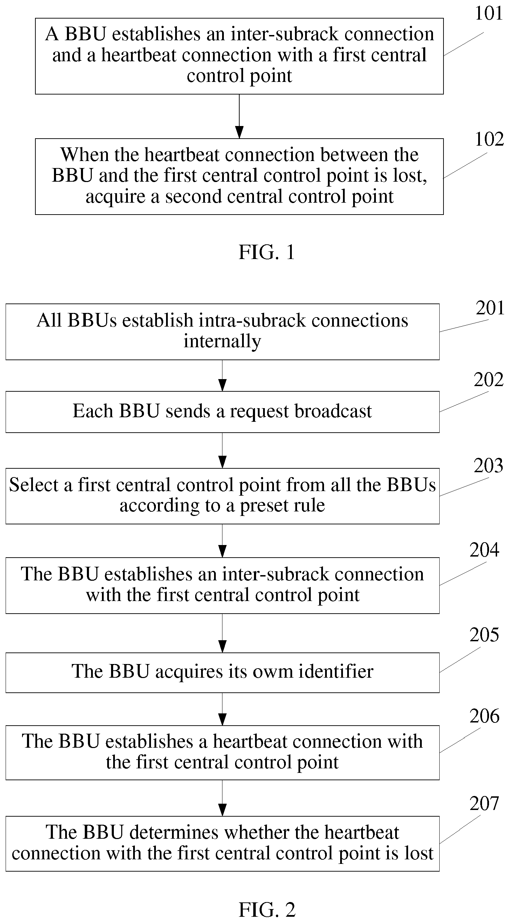

An embodiment of the present invention provides a method for autonomy of a base station, and as shown in FIG 1, the method includes:
101: A BBU establishes an inter-subrack connection and a heartbeat connection with a first central control point.

The inter-subrack connection determines a communication manner between the BBU and the first central control point. A communications protocol for establishing an inter-subrack connection includes, but is not limited to the Q.922/TCP/UDP protocol. The heartbeat connection means that the BBU may receive, according to a preset period, feedback information sent by the first central control point, to indicate that the BBU stays connected to the first central control point. Otherwise, it indicates that a heartbeat of the BBU is lost. The preset period may be any time period. For example, the preset period cannot be excessively long according to an actual situation, and may be set to 1s, 2s or the like.

Further, the heartbeat connection, that is, the first central control point sends a feedback message to the BBU according to the preset period in the communication manner defined by the inter-subrack connection, so that the BBU can receive the feedback message within the preset period.

102: When the heartbeat connection between the BBU and the first central control point is lost, acquire a second central control point.

It should be noted that, this step of acquiring a second central control point means that the BBU reselects a central control point from BBUs of which heartbeat connections with the first central control point are lost and for which heartbeat connections with the first central control point fail to be reestablished, and uses the new central control point as the second central control point. That is, when the heartbeat connection between the BBU and the first central control point is lost, the BBU first attempts to reestablish the heartbeat connection, and considers to acquire the foregoing second central control point only when the heartbeat connection fails to be reestablished.

According to the method for autonomy of a base station provided in this embodiment of the present invention, after an inter-subrack connection and a heartbeat connection with a first central control point are established, when the heartbeat connection with the first central control point is lost, a second central control point is acquired. In the prior art, after contact with a central control system is lost, a borne service is caused to be interrupted, thereby leading to low utilization of a device. But in the technical solution provided in the present invention, after BBUs lose contact with a central control system, a new central control point can be acquired from these BBUs, and services that have already been borne by these BBUs can be kept from being interrupted, thereby improving utilization of a device.

Another embodiment of the present invention provides a method for autonomy of a base station, and as shown in FIG. 2, the method includes:
201: All BBUs establish intra-subrack connections internally.

The intra-subrack connection is used for implementing intra-subrack communication. A protocol for establishing an intra-subrack connection includes, but is not limited to, the Q.922/TCP/UDP protocol, and the protocol for establishing an intra-subrack connection may be the same as or may be different from a protocol for establishing an inter-subrack connection. With reference to the foregoing description of the BBU in the embodiments, because the BBU includes several boards, when intra-subrack communication is implemented, the boards in the BBU can communicate with each other.

202: Each BBU sends a request broadcast.

The request broadcast is sent, that is, information for requesting to become a first central control point is sent. Further, each BBU can receive request broadcasts sent by the rest BBUs.

203: Select a first central control point from all the BBUs according to a preset rule.

The preset rule includes: acquiring topology information of interconnection of the BBUs; and selecting, according to an algorithm, a BBU corresponding to a root node of a topology result as the first central control point, or selecting, according to a quantity of the rest BBUs connected to a BBU, a BBU having a maximum quantity of connections as the first central control point, or the like. The foregoing are only two implementation manners for selecting the first central control point, which is not limited in this embodiment of the present invention.

It should be noted that, each BBU executes the foregoing preset rule according to the request broadcast of the BBU and the request broadcasts of the rest BBUs, and the preset rule executed by each BBU may be the same or may be different. However, whichever preset rule is used, the foregoing first central control point can be determined uniquely from these BBUs. For example, by using that a root node is selected as the first central control point according to a topological structure as an example, because each BBU acquires request broadcasts of all the BBUs, locations of these BBUs in the topological structure are also determined uniquely, so that the unique root node is acquired as the first central control point.

Optionally, in a process of executing this step, one first central control point may be selected, and another node may also be selected as a backup central control point. When some BBUs lose connections with the central control point, the BBUs may attempt to establish connections with the backup central control point.

204: The each BBU establishes an inter-subrack connection with the first central control point.

It should be noted that, this step corresponds to step 101 of the foregoing embodiment, and a related description is the same, which is not described herein again. In addition, the inter-subrack connection is established in this step, and in combination with the intra-subrack connection completed in step 201, a communication mode of intra-subrack and inter-subrack hierarchical separation is implemented in an entire cloud base station system. In this way, security and stability of communication between BBUs are ensured, and complexity of a device is also reduced.

Further, after establishment of the inter-subrack connection is completed, the first central control point establishes a connection with a network manager, so that the network manager manages the entire cloud base station system.

205: The each BBU acquires its own identifier.

The BBU acquires its own identifier, which includes, but is not limited to, the following two implementation manners:
A first implementation manner: The first central control point allocates identifiers to BBUs.

Optionally, the first central control point may sequentially allocate the identifiers to the BBUs according to a sequence in which the BBUs are connected to the first central control point.

A second implementation manner: A BBU performs calculation according to a topology connection relationship of the BBU, to obtain an identifier.

It should be noted that, the identifier of the BBU includes, but is not limited to, being indicated by using a number. For example, with reference to an optional implementation manner of the first implementation manner, a first BBU establishing a connection with the first central control point may be allocated an identifier 1, and an identifier of a second BBU establishing a connection with the first central control point is 2, so that BBUs that are connected to the first central control point subsequently may be allocated identifiers sequentially.

Further, it should be noted that, the BBU acquires its own identifier, so that on-demand connection establishment can be executed between the BBUs. For example, if BBU-1 needs to perform a communication service with BBU-2, BBU-1 needs to acquire, from the first central control point by means of a connection between BBU-1 and the first central control point, address information of BBU-2 corresponding to an identifier of BBU-2, so that BBU-1 establishes a connection with BBU-2, to implement the communication service. With reference to the description of the foregoing example, a connection is established on demand between the BBUs, so as to implement inter-subrack communication between different BBUs.

206: The each BBU establishes a heartbeat connection with the first central control point.

It should be noted that, related content of this step is the same as that of step 101 in the foregoing embodiment, which is not described herein again.

207: The each BBU determines whether the heartbeat connection with the first central control point is lost.

Specifically, each BBU determines whether the heartbeat connection of the BBU is lost. After it is determined that the BBU loses the heartbeat connection, a communication service cannot continue to be performed, and the heartbeat connection needs to be reestablished.

Further, when the BBU determines that the heartbeat connection with the first central control point is lost, the BBU first attempts to reestablish the heartbeat connection with the first central control point, and acquires a second central control point only when the heartbeat connection fails to be reestablished.

Further, after the second central control point is acquired from BBUs of which heartbeat connections with the first central control point fail to be reestablished, inter-subrack connections and heartbeat connections between these BBUs and the second central control point are established. In this way, uninterrupted services between the second central control point and the BBUs connected to the second central control point, and between the BBUs connected to the second central control point can continue to be kept. The uninterrupted services refer to services that have already been borne by these BBUs and are not interrupted because the BBUs lose heartbeat connections with the first central control point.

Specifically, when a preset time arrives or is exceeded, the heartbeat connection is still not established successfully, or when a quantity of times for reestablishing the heartbeat connection reaches or exceeds a preset quantity of times, it is determined that the heartbeat connection fails to be reestablished for the BBU, and the heartbeat connection is lost, and then the second central control point needs to be acquired from these BBUs of which the heartbeat connections fail to be reestablished. The preset time and the preset quantity of times may be set by a user or a system. For example, the preset time may be set to 1 min or 30s; and the preset quantity of times may be set to 3 times, 5 times, 10 times or the like.

Further, after it is determined that a heartbeat is lost, a new central control point, that is, the second central control point, needs to be selected from the BBUs losing heartbeats. Specifically, the second central control point is selected from the BBUs losing the heartbeats, that is, steps 202 to 207 in the foregoing need to be re-executed, and when the second central control point is determined, the second central control point needs to establish a connection with the network manager.

It should be noted that, new central control point selection mentioned in this embodiment of the present invention is a cyclic process, that is, when there are BBUs that lose heartbeat connections with a central control point and heartbeat connections fail to be reestablished, a new central control point needs to be selected from these BBUs for which heartbeat connections fail to be reestablished.

According to the method for autonomy of a base station provided in this embodiment of the present invention, after an inter-subrack connection and a heartbeat connection with a first central control point are established, when it is determined that the heartbeat connection with the first central control point is lost, and the heartbeat connection fails to be reestablished, a second central control point is acquired. In the prior art, after contact with a central control system is lost, a borne service is caused to be interrupted, thereby leading to low utilization of a device. But in the technical solution provided in the present invention, after BBUs lose contact with a central control system, a new central control point can be acquired from these BBUs, and services that have already been borne by these BBUs can be kept from being interrupted, thereby improving utilization of a device.

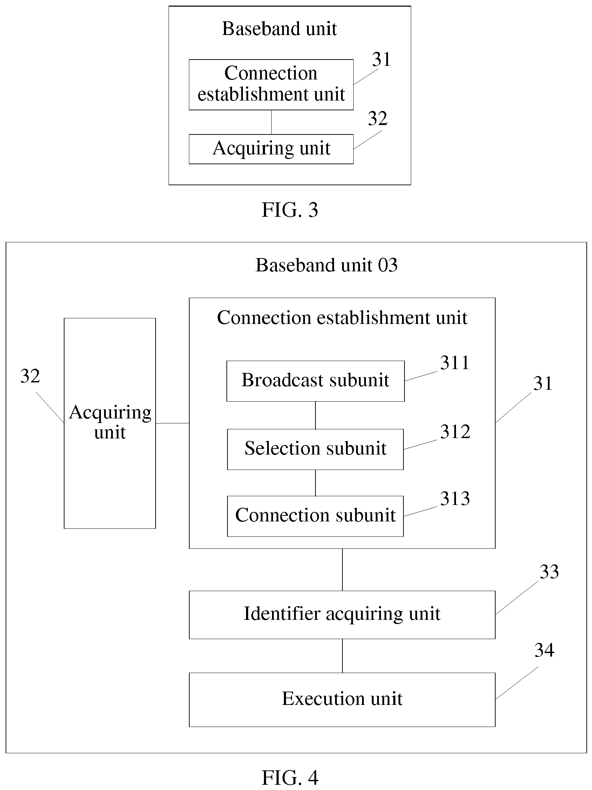

Another embodiment of the present invention provides a baseband unit 03, and as shown in FIG. 3, the baseband unit includes: a connection establishment unit 31 and an acquiring unit 32.

The connection establishment unit 31 is configured to establish an inter-subrack connection and a heartbeat connection with a first central control point.

The inter-subrack connection determines a communication manner between the BBU and the first central control point. A communications protocol for establishing an inter-subrack connection includes, but is not limited to the Q.922/TCP/UDP protocol. The heartbeat connection means that the BBU may receive, according to a preset period, feedback information sent by the first central control point, to indicate that the BBU stays connected to the first central control point. Otherwise, it indicates that a heartbeat of the BBU is lost. The preset period may be any time period. For example, the preset period cannot be excessively long according to an actual situation, and may be set to 1s, 2s or the like.

Further, the heartbeat connection, that is, the first central control point sends a feedback message to the BBU according to the preset period in the communication manner defined by the inter-subrack connection, so that the BBU can receive the feedback message within the preset period.

The acquiring unit 32 is configured to: when it is determined that the heartbeat connection established by the connection establishment unit 31 with the first central control point is lost, acquire a second central control point.

Optionally, when the heartbeat connection with the first central control point is lost, the BBU first attempts to reestablish the heartbeat connection, and considers to acquire the foregoing second central control point only when the heartbeat connection fails to be reestablished.

Optionally, as shown in FIG. 4, the connection establishment unit 31 includes: a broadcast subunit 311, a selection subunit 312, a connection subunit 313; and the baseband unit further includes: an identifier acquiring unit 33 and an execution unit 34.

The broadcast subunit 311 is configured to initiate a request broadcast, where the request broadcast is used for requesting to become the first central control point.

The selection subunit 312 is configured to select the first central control point according to a preset rule and the request broadcast initiated by the broadcast subunit 311.

The preset rule includes: acquiring topology information of interconnection of BBUs; and selecting, according to an algorithm, a BBU corresponding to a root node of a topology result as the first central control point, or selecting, according to a quantity of the rest BBUs connected to a BBU, a BBU having a maximum quantity of connections as the first central control point, or the like. The foregoing are only two implementation manners for selecting the first central control point, which is not limited in this embodiment of the present invention.

It should be noted that, each BBU executes the foregoing preset rule according to the request broadcast of the BBU and request broadcasts of the rest BBUs, and the preset rule executed by each BBU may be the same or may be different. However, whichever preset rule is used, the foregoing first central control point can be determined uniquely from these BBUs. For example, by using that a root node is selected as the first central control point according to a topological structure as an example, because each BBU acquires request broadcasts of all the BBUs, locations of these BBUs in the topological structure are also determined uniquely, so that the unique root node is acquired as the first central control point.

The connection subunit 313 is configured to establish a connection with the first central control point selected by the selection subunit 312, where the connection is the foregoing inter-subrack connection.

The identifier acquiring unit 33 is configured to acquire an identifier after the connection establishment unit 31 establishes the inter-subrack connection with the first central control point, where the identifier is used for implementing an inter-subrack connection between BBUs.

Acquiring the identifier includes, but is not limited to the following two implementation manners:
A first implementation manner: The first central control point allocates identifiers to BBUs.

Optionally, the first central control point may sequentially allocate the identifiers to the BBUs according to a sequence in which the BBUs are connected to the first central control point.

A second implementation manner: A BBU performs calculation according to a topology connection relationship of the BBU, to obtain an identifier.

It should be noted that, the identifier of the BBU includes, but is not limited to, being indicated by using a number. For example, with reference to an optional implementation manner of the first implementation manner, a first BBU establishing a connection with the first central control point may be allocated an identifier 1, and an identifier of a second BBU establishing a connection with the first central control point is 2, so that BBUs that are connected to the first central control point subsequently may be allocated identifiers sequentially.

Further, it should be noted that, the BBU acquires its own identifier, and on-demand connection establishment is executed between the BBUs. For example, if BBU-1 needs to perform a communication service with BBU-2, BBU-1 needs to acquire, from the first central control point by means of a connection between BBU-1 and the first central control point, address information of BBU-2 corresponding to an identifier of BBU-2, so that BBU-1 establishes a connection with BBU-2, to implement the communication service. With reference to the foregoing description of the foregoing example, a connection is established on demand between the BBUs, so as to implement inter-subrack communication between different BBUs.

The execution unit 34 executes on-demand connection establishment between the BBUs according to the identifier acquired by the identifier acquiring unit 33.

Further, the acquiring unit 32 is further configured to acquire the second central control point from BBUs that have lost heartbeat connections with the first central control point.

Optionally, the connection establishment unit 31 is further configured to: before the acquiring unit 32 acquires the second central control point, when the heartbeat connection with the first central control point is lost, reestablish the heartbeat connection with the first central control point.

The acquiring unit 32 is specifically configured to: when the connection establishment unit 31 fails to reestablish the heartbeat connection, acquire the second central control point.

Optionally, the connection establishment unit 31 is further configured to establish an intra-subrack connection, so that intra-subrack and inter-subrack hierarchical separation is implemented for communication; and is further configured to: after the acquiring unit 32 acquires the second central control point, establish a connection between the second central control point and a network manager.

It should be noted that the intra-subrack connection is used for implementing intra-subrack communication. A protocol for establishing an intra-subrack connection includes, but is not limited to, the Q.922/TCP/UDP protocol, and the protocol for establishing an intra-subrack connection may be the same as or may be different from a protocol for establishing an inter-subrack connection. With reference to the foregoing description of the BBU in the embodiments, because the BBU includes several boards, when intra-subrack communication is implemented, the boards in the BBU can communicate with each other.

According to the baseband unit provided in this embodiment of the present invention, after a connection establishment unit establishes an inter-subrack connection and a heartbeat connection with a first central control point, when it is determined that the heartbeat connection with the first central control point is lost, and the connection establishment unit fails to reestablish the heartbeat connection, an acquiring unit acquires a second central control point. In the prior art, after contact with a central control system is lost, a borne service is caused to be interrupted, thereby leading to low utilization of a device. But in the technical solution provided in the present invention, after baseband units lose contact with a central control system, a new central control point can be reselected from these baseband units, and services that have already been borne by these baseband units can be kept from being interrupted, thereby improving utilization of a device.

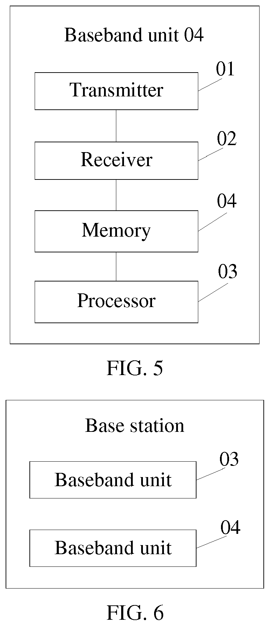

Another embodiment of the present invention provides a baseband unit 04, and as shown in FIG. 5, the baseband unit includes: a transmitter 01, a receiver 02, a processor 03, and a memory 04.

The transmitter 01 is configured to initiate a request broadcast.

Optionally, the request broadcast is used for requesting to become a first central control point.

The receiver 02 is configured to receive the request broadcast initiated by the transmitter 01.

The memory 04 is configured to store the request broadcast received by the receiver 02.

The processor 03 is configured to: select the first central control point according to a preset rule and the request broadcast that is stored by the memory 04; establish an inter-subrack connection and a heartbeat connection with the first central control point; and when the heartbeat connection with the first central control point is lost, acquire a second central control point.

The memory 04 is further configured to store the preset rule, and store a connection relationship of the inter-subrack connection and a connection relationship of the heartbeat connection with the first central control point.

Optionally, the processor 03 is further configured to: acquire an identifier after the inter-subrack connection is established with the first central control point, where the identifier is used for implementing an inter-subrack connection between BBUs, and execute on-demand connection establishment between the BBUs according to the identifier; and is further configured to establish an intra-subrack connection, so that intra-subrack and inter-subrack hierarchical separation is implemented for communication.

Optionally, the memory 04 is further configured to store the identifier acquired by the processor 03.

Specifically, the processor 03 is further configured to: acquire the second central control point from BBUs that have lost heartbeat connections with the first central control point; before the second central control point is acquired, when the heartbeat connection with the first central control point is lost, reestablish the heartbeat connection with the first central control point; and when the heartbeat connection fails to be reestablished, acquire the second central control point.

Further, the processor 03 is further configured to: after the second central control point is acquired, establish a connection between the second central control point and a network manager.

According to the baseband unit provided in this embodiment of the present invention, after a processor establishes an inter-subrack connection and a heartbeat connection with a first central control point, when it is determined that the heartbeat connection with the first central control point is lost, a second central control point is acquired. In the prior art, after contact with a central control system is lost, a borne service is caused to be interrupted, thereby leading to low utilization of a device. But in the technical solution provided in the present invention, after baseband units lose contact with a central control system, a new central control point can be selected from these baseband units, and services that have already been borne by these baseband units can be kept from being interrupted, thereby improving utilization of a device.

Another embodiment of the present invention provides a base station, as shown in FIG. 6, including a baseband unit 03 or a baseband unit 04. The baseband unit 03 includes the foregoing units 31 to 34, and the baseband unit 04 includes the transmitter 01, the receiver 02, the processor 03, and the memory 04 in the foregoing.

Another embodiment of the present invention provides a cloud base station system, where the system includes a baseband units 03 or a baseband units 04 or a base station as shown in FIG. 6.

According to the base station and the cloud base station system provided in this embodiment of the present invention, after an inter-subrack connection and a heartbeat connection with a first central control point are established, when it is determined that the heartbeat connection with the first central control point is lost, and the heartbeat connection fails to be reestablished, a second central control point is acquired. In the prior art, after contact with a central control system is lost, a borne service is caused to be interrupted, thereby leading to low utilization of a device. But in the technical solution provided in the present invention, after baseband units lose contact with a central control system, a new central control point can be reselected from these baseband units, and services that have already been borne by these baseband units can be kept from being interrupted, thereby improving utilization of a device.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for autonomy of a base station, wherein the base station comprises at least one baseband unit, BBU, the method comprising:
establishing (101), by the at least one BBU, an inter-subrack connection and a heartbeat connection with a first central control point, wherein the establishing an inter-subrack connection with a first central control point comprises:
initiating a request broadcast, wherein the request broadcast is used for requesting to become the first central control point;
selecting the first central control point according to a preset rule; and
establishing a connection with the first central control point, wherein the connection is the inter-subrack connection; and
when the heartbeat connection with the first central control point is lost, acquiring (102), by the at least one BBU, a second central control point.

2. The method for autonomy of a base station according to claim 1, after the establishing an inter-subrack connection with a first central control point, further comprising:
acquiring an identifier, wherein the identifier is used for implementing an inter-subrack connection between BBUs; and
executing on-demand connection establishment between the BBUs according to the identifier.

3. The method for autonomy of a base station according to claim 1 or 2, wherein the acquiring a second central control point comprises:
acquiring the second central control point from BBUs that have lost heartbeat connections with the first central control point.

4. The method for autonomy of a base station according to any one of claims 1 to 3, further comprising:
when the heartbeat connection with the first central control point is lost, reestablishing the heartbeat connection with the first central control point; and
when the heartbeat connection fails to be reestablished, acquiring the second central control point.

5. The method for autonomy of a base station according to any one of claims 1 to 4, further comprising:
establishing an intra-subrack connection, so that intra-subrack and inter-subrack hierarchical separation is implemented for communication.

6. The method for autonomy of a base station according to any one of claims 1 to 5, after the second central control point is acquired, further comprising:
establishing, by the second central control point, a connection with a network manager.

7. A baseband unit, comprising:
a connection establishment unit (31), configured to establish an inter-subrack connection and a heartbeat connection with a first central control point, wherein the connection establishment unit comprises:
a broadcast subunit, configured to initiate a request broadcast, wherein the request broadcast is used for requesting to become the first central control point;
a selection subunit, configured to execute a preset rule according to the request broadcast of the broadcast subunit, to select the first central control point; and
a connection subunit, configured to establish a connection with the first central control point selected by the selection subunit, wherein the connection is the inter-subrack connection; and
an acquiring unit (32), configured to: when the heartbeat connection established by the connection establishment unit with the first central control point is lost, acquire a second central control point.

8. The baseband unit according to claim 7 further comprising:
an identifier acquiring unit, configured to acquire an identifier after the connection establishment unit establishes the inter-subrack connection with the first central control point, wherein the identifier is used for implementing an inter-subrack connection between baseband units BBUs; and
an execution unit, configured to execute on-demand connection establishment between the BBUs according to the identifier acquired by the identifier acquiring unit.

9. The baseband unit according to claim 7 or 8, wherein the acquiring unit is specifically configured to acquire the second central control point from BBUs that have lost heartbeat connections with the first central control point.

10. The baseband unit according to any one of claims 7 to 9, wherein:
the connection establishment unit is further configured to: before the acquiring unit acquires the second central control point, when the heartbeat connection with the first central control point is lost, reestablish the heartbeat connection with the first central control point; and
the acquiring unit is specifically configured to: when the connection establishment unit fails to reestablish the heartbeat connection, acquire the second central control point.

11. The baseband unit according to any one of claims 7 to 10, wherein:
the connection establishment unit is further configured to establish an intra-subrack connection, so that intra-subrack and inter-subrack hierarchical separation is implemented for communication.

12. The baseband unit according to any one of claims 7 to 11 wherein the connection establishment unit is further configured to: after the acquiring unit acquires the second central control point, establish a connection between the second central control point and a network manager.

## Patentansprüche

1. Verfahren zur Autonomie einer Basisstation, wobei die Basisstation wenigstens eine Basisbandeinheit (BBU - Base Band Unit) umfasst, wobei das Verfahren umfasst:
Herstellen (101) durch die wenigstens eine BBU einer Inter-Baugruppenträgerverbindung und einer Herzschlagverbindung mit einem ersten Zentralbezugspunkt, wobei das Herstellen einer Inter-Baugruppenträgerverbindung mit einem ersten Zentralbezugspunkt umfasst:
Einleiten einer Anfragerundsendung, wobei die Anfragerundsendung zum Anfragen benutzt wird, der erste Zentralbezugspunkt zu werden;
Auswählen des ersten Zentralbezugspunkts nach einer voreingestellten Regel; und
Herstellen einer Verbindung mit dem ersten Zentralbezugspunkt, wobei die Verbindung die Inter-Baugruppenträgerverbindung ist; und
wenn die Herzschlagverbindung mit dem ersten Zentralbezugspunkt verlorengeht, Erfassen (102) durch die wenigstens eine BBU eines zweiten Zentralbezugspunkts.

2. Verfahren zur Autonomie einer Basisstation nach Anspruch 1, nach dem Herstellen einer Inter-Baugruppenträgerverbindung mit einem ersten Zentralbezugspunkt, weiterhin umfassend:
Erfassen einer Kennung, wobei die Kennung zum Umsetzen einer Inter-Baugruppenträgerverbindung zwischen BBU benutzt wird; und
Ausführen von Bedarfs-Verbindungsherstellung zwischen den BBU gemäß der Kennung.

3. Verfahren zur Autonomie einer Basisstation nach Anspruch 1 oder 2, wobei das Erfassen eines zweiten Zentralbezugspunkts umfasst:
Erfassen des zweiten Zentralbezugspunkts von BBU, die Herzschlagverbindungen mit dem ersten Zentralbezugspunkt verloren haben.

4. Verfahren zur Autonomie einer Basisstation nach einem beliebigen der Ansprüche 1 bis 3, weiterhin umfassend:
wenn die Herzschlagverbindung mit dem ersten Zentralbezugspunkt verlorengeht, Wiederherstellen der Herzschlagverbindung mit dem ersten Zentralbezugspunkt; und
wenn die Herzschlagverbindung nicht wiederhergestellt werden kann, Erfassen des zweiten Zentralbezugspunkts.

5. Verfahren zur Autonomie einer Basisstation nach einem beliebigen der Ansprüche 1 bis 4, weiterhin umfassend:
Herstellen einer Intra-Baugruppenträgerverbindung, so dass hierarchische Intra-Baugruppenträger- und Inter-Baugruppenträgertrennung zur Kommunikation umgesetzt wird.

6. Verfahren zur Autonomie einer Basisstation nach einem beliebigen der Ansprüche 1 bis 5, nachdem der zweite Zentralbezugspunkt erfasst wird, weiterhin umfassend:
Herstellen durch den zweiten Zentralbezugspunkt einer Verbindung mit einem Netzverwalter.

7. Basisbandeinheit umfassend:
eine Verbindungsherstellungseinheit (31), eingerichtet zum Herstellen einer Inter-Baugruppenträgerverbindung und einer Herzschlagverbindung mit einem ersten Zentralbezugspunkt, wobei die Verbindungsherstellungseinheit umfasst:
eine Rundsende-Teileinheit, eingerichtet zum Einleiten einer Anfragerundsendung, wobei die Anfragerundsendung zum Anfragen benutzt wird, der erste Zentralbezugspunkt zu werden;
eine Auswählteileinheit, eingerichtet zum Ausführen einer voreingestellten Regel gemäß der Anfragerundsendung der Rundsende-Teileinheit zum Auswählen des ersten Zentralbezugspunkts; und
eine Verbindungsteileinheit, eingerichtet zum Herstellen einer Verbindung mit dem durch die Auswählteileinheit ausgewählten ersten Zentralbezugspunkt, wobei die Verbindung die Inter-Baugruppenträgerverbindung ist; und
eine Erfassungseinheit (32), eingerichtet zum: wenn die durch die Verbindungsherstellungseinheit hergestellte Herzschlagverbindung mit dem ersten Zentralbezugspunkt verlorengeht, Erfassen eines zweiten Zentralbezugspunkts.

8. Basisbandeinheit nach Anspruch 7, weiterhin umfassend:
eine Kennungserfassungseinheit, eingerichtet zum Erfassen einer Kennung, nachdem die Verbindungsherstellungseinheit die Inter-Baugruppenträgerverbindung mit dem ersten Zentralbezugspunkt herstellt, wobei die Kennung zum Umsetzen einer Inter-Baugruppenträgerverbindung zwischen Basisbandeinheiten BBU benutzt wird; und
eine Ausführungseinheit, eingerichtet zum Ausführen von Bedarfs-Verbindungsherstellung zwischen den BBU gemäß der durch die Kennungserfassungseinheit erfassten Kennung.

9. Basisbandeinheit nach Anspruch 7 oder 8, wobei die Erfassungseinheit besonders eingerichtet ist zum Erfassen des zweiten Zentralbezugspunkts von BBU, die Herzschlagverbindungen mit dem ersten Zentralbezugspunkt verloren haben.

10. Basisbandeinheit nach einem beliebigen der Ansprüche 7 bis 9, wobei:
die Verbindungsherstellungseinheit weiterhin eingerichtet ist zum: ehe die Erfassungseinheit den zweiten Zentralbezugspunkt erfasst, wenn die Herzschlagverbindung mit dem ersten Zentralbezugspunkt verloren ist, Wiederherstellen der Herzschlagverbindung mit dem ersten Zentralbezugspunkt und die Erfassungseinheit besonders eingerichtet ist zum: wenn die Verbindungsherstellungseinheit die Herzschlagverbindung nicht wiederherstellen kann, Erfassen des zweiten Zentralbezugspunkts.

11. Basisbandeinheit nach einem beliebigen der Ansprüche 7 bis 10, wobei:
die Verbindungsherstellungseinheit weiterhin eingerichtet ist zum Herstellen einer Intra-Baugruppenträgerverbindung, so dass hierarchische Intra-Baugruppen- und Inter-Baugruppenträgertrennung zur Kommunikation umgesetzt wird.

12. Basisbandeinheit nach einem beliebigen der Ansprüche 7 bis 11, wobei die Verbindungsherstellungseinheit weiterhin eingerichtet ist zum: nachdem die Erfassungseinheit den zweiten Zentralbezugspunkt erfasst, Herstellen einer Verbindung zwischen dem zweiten Zentralbezugspunkt und einem Netzverwalter.

## Revendications

1. Procédé d'autonomie pour une station de base, laquelle station de base comprend au moins une unité de bande de base BBU, le procédé consistant à :
établir (101) par ladite au moins une BBU une connexion inter-sous-pistes et une connexion de pulsation avec un premier point de commande central, dans lequel l'établissement d'une connexion inter-sous-pistes avec un premier point de commande central consiste à :
initier une diffusion de demande, la diffusion de demande étant utilisée pour demander de devenir le premier point de commande central ;
choisir le premier point de commande central en fonction d'une règle prédéfinie ; et
établir une connexion avec le premier point de commande central, la connexion étant la connexion inter-sous-pistes ; et
lorsque la connexion de pulsation avec le premier point de commande central est perdue, acquérir (102) par ladite au moins une BBU un second point de commande central.

2. Procédé d'autonomie pour une station de base selon la revendication 1, lequel consiste en outre, après avoir établi une connexion inter-sous-pistes avec un premier point de commande central, à :
acquérir un identifiant, lequel identifiant est utilisé pour mettre en oeuvre une connexion inter-sous-pistes entre des BBU ; et
exécuter un établissement de connexion à la demande entre les BBU en fonction de l'identifiant.

3. Procédé d'autonomie pour une station de base selon la revendication 1 ou 2, dans lequel l'acquisition d'un second point de contrôle central consiste à acquérir le second point de commande central à partir des BBU qui ont perdu les connexions de pulsation avec le premier point de commande central.

4. Procédé d'autonomie pour une station de base selon l'une quelconque des revendications 1 à 3, consistant en outre à :
lorsque la connexion de pulsation avec le premier point de commande central est perdue, ré-établir la connexion de pulsation avec le premier point de commande central ; et
lorsque la connexion de pulsation ne peut pas être ré-établie, acquérir le second point de commande central.

5. Procédé d'autonomie pour une station de base selon l'une quelconque des revendications 1 à 4, consistant en outre à établir une connexion intra-sous-pistes de sorte qu'une séparation hiérarchique intra-sous-pistes et inter-sous-pistes soit mise en oeuvre pour la communication.

6. Procédé d'autonomie pour une station de base selon l'une quelconque des revendications 1 à 5, consistant en outre, après avoir acquis le second point de commande central, à établir par le second point de commande central une connexion avec un gestionnaire de réseau.

7. Unité de bande de base comprenant :
une unité d'établissement de connexion (31) conçue pour établir une connexion inter-sous-pistes et une connexion de pulsation avec un premier point de commande central, laquelle unité d'établissement de connexion comprend :
une sous-unité de diffusion conçue pour initier une diffusion de demande, la diffusion de demande étant utilisée pour demander de devenir le premier point de commande central ;
une sous-unité de sélection conçue pour exécuter une règle prédéfinie en fonction de la diffusion de demande de la sous-unité de diffusion afin de choisir le premier point de commande central ; et
une sous-unité de connexion conçue pour établir une connexion avec le premier point de commande central choisi par la sous-unité de sélection, la connexion étant la connexion inter-sous-pistes ; et
une unité d'acquisition (32) conçue pour, lorsque la connexion de pulsation établie par l'unité d'établissement de connexion avec le premier point de commande central est perdue, acquérir un second point de commande central.

8. Unité de bande de base selon la revendication 7, comprenant en outre :
une unité d'acquisition d'identifiant conçue pour acquérir un identifiant une fois que l'unité d'établissement de connexion a établi la connexion inter-sous-pistes avec le premier point de commande central, lequel identifiant est utilisé pour mettre en oeuvre une connexion inter-sous-pistes entre des unités de bande de base BBU ; et une unité d'exécution conçue pour exécuter un établissement de connexion à la demande entre les BBU en fonction de l'identifiant acquis par l'unité d'acquisition d'identifiant.

9. Unité de bande de base selon la revendication 7 ou 8, dans laquelle l'unité d'acquisition est spécifiquement conçue pour acquérir le second point de commande central à partir des BBU qui ont perdu les connexions de pulsation avec le premier point de commande central.

10. Unité de bande de base selon l'une quelconque des revendications 7 à 9, dans laquelle :
l'unité d'établissement de connexion est en outre conçue pour, avant que l'unité d'acquisition acquière le second point de commande central lorsque la connexion de pulsation avec le premier point de commande central est perdue, ré-établir la connexion de pulsation avec le premier point de commande central ; et
l'unité d'acquisition est spécifiquement conçue pour, lorsque l'unité d'établissement de connexion ne parvient pas à ré-établir la connexion de pulsation, acquérir le second point de commande central.

11. Unité de bande de base selon l'une quelconque des revendications 7 à 10, dans laquelle l'unité d'établissement de connexion est en outre conçue pour établir une connexion intra-sous-pistes de sorte qu'une séparation hiérarchique intra-sous-pistes et inter-sous-pistes soit mise en oeuvre pour la communication.

12. Unité de bande de base selon l'une quelconque des revendications 7 à 11, dans laquelle l'unité d'établissement de connexion est en outre conçue pour, une fois que l'unité d'acquisition a acquis le second point de commande central, établir une connexion entre le second point de commande central et un gestionnaire de réseau.
